# EUROPEAN PATENT APPLICATION

(11) **EP 2 778 383 A1**
(43) Date of publication of application: **17.09.2014**
(21) Application number: 14159626.2
(22) Date of filing: 13.03.2014
(51) Int. Cl.: F02M 35/10, F02M 35/104, F02M 35/112, F16L 17/025, F16L 21/04

(54) **Intake manifold for internal combustion engine**

(30) Priority: 15.03.2013 JP 2013052793
(71) Applicant: MAHLE Filter Systems Japan Corporation, Tokyo 170-0004 (JP)
(72) Inventor: Horii, Kiyohide, Toshima-ku, Tokyo 170-0004 (JP)
(74) Representative: Grünecker, Kinkeldey, Stockmair & Schwanhäusser

(57) **Abstract**

An intake manifold for an internal combustion engine, comprises an upstream unit of molded resin, the upstream unit including an elongate collector portion that has an inlet opening for introducing cleaned air, and a manifold portion that includes a plurality of curved tubes that are fixed to one another, each curbed tube having an inlet opening exposed to an interior of the elongate collector portion; a downstream unit of molded resin, the downstream unit including a base portion that is to be connected to a cylinder head of the engine and a plurality of apertured collar portions that are projected from the base portion; and a plurality of sealing members through which leading ends of the curved tubes are hermetically inserted into the apertured collar portions thereby to constitute an entire construction of the intake manifold, wherein the molded resin of the downstream unit has a heat resistance that is higher than that of the upstream unit.

## Description

### BACKGROUND OF THE INVENTION:

### 1. Field of the Invention:

The present invention relates in general to intake manifolds for an internal combustion engine, and more particularly to the intake manifolds of a type that is made of molded resin. More specifically, the present invention is concerned with the intake manifolds of a split type that includes an upstream unit of molded resin and a downstream unit of molded resin, both of which are coupled together to constitute an entire construction of the intake manifold.

### 2. Description of the Related Art:

In order to clarify the present invention, one conventional intake manifold of the above-mentioned type, namely, the intake manifold disclosed in Japanese Laid-open Patent Application (tokkai) 2009-74509 will be briefly described in the following.

The intake manifold disclosed by the above-mentioned published Application is of the split type comprising a serge tank portion that is constructed of molded resin and a tube collected portion that is constructed of molded resin and has tubes of which number corresponds to that of cylinders of an associated internal combustion engine. In the intake manifold of the published application, the serge tank portion is directly connected to the internal combustion engine (namely, a cylinder head), and thus the serge tank portion is molded from an expensive resin that has a sufficient resistance against the high heat produced by the engine. While, the resin of the tube collected portion, which is not directly connected to the engine, is somewhat low in heat resistance and thus inexpensive. Thus, intake manifolds of the above-mentioned split type can be made at relatively low cost due to usage of inexpensive resin.

### SUMMARY OF THE INVENTION:

However, the intake manifolds of the above-mentioned conventional type have the following weak point. In fact, for assembling the intake manifold, the tubes of the tube collected portion have to be manually fixed to different given portions of serge tank portion one by one, which can sometimes be troublesome, requiring the employment of skilled labor and time. That is, the intake manifold of the published Application is low in productivity.

Accordingly, an object of the present invention is to provide a split type intake manifold of molded resin, which is free of the above-mentioned drawback.

In accordance with a first aspect of the present invention, there is provided an intake manifold for an internal combustion engine, which comprises an upstream unit (12) of molded resin, the upstream unit (12) including an elongate collector portion (17) that has an inlet opening (17a) for introducing cleaned air, and a manifold portion (18) that includes a plurality of curved tubes (18a) that are fixed to one another, each curved tube (18a) having an inlet opening exposed to an interior of the elongate collector portion (17); a downstream unit (11) of molded resin, the downstream unit (11) including a base portion (13) that is to be connected to a cylinder head (2) of the engine and a plurality of apertured collar portions (14) that are projected from the base portion (13); and a plurality of sealing members (20) through which leading ends (18b) of the curved tubes (18a) are hermetically inserted into the apertured collar portions (14) thereby to constitute an entire construction of the intake manifold, wherein the molded resin of the downstream unit (11) has a heat resistance that is higher than that of the upstream unit (12).

In accordance with a second aspect of the present invention, there is provided a split type intake manifold for an internal combustion engine, which comprises an upstream unit (12) of molded resin, the upstream unit (12) including an elongate collector portion (17) that has an inlet opening (17a) for introducing cleaned air, and a manifold portion (18) that includes a plurality of curved tubes (18a) that are fixed to one another through connecting walls (19); a downstream unit (11) of molded resin, the downstream unit (11) including a base portion (13) that is to be connected to a cylinder head (2) of the engine and a plurality of apertured collar portions (14) that are projected from the base portion (13); a plurality of cylindrical sealing members (20) through which leading ends (18b) of the curved tubes (18a) are hermetically inserted into the apertured collar portions (14) respectively thereby to constitute an entire construction of the intake manifold, wherein the molded resin of the downstream unit (11) has a heat resistance that is higher than that of the upstream unit (12).

### BRIEF DESCRIPTION OF THE DRAWINGS:

Other objects and advantages of the present invention will become apparent from the following description when taken in conjunction with the accompanying drawings, in which:
   Fig. 1 is a schematic side view of an intake manifold of the present invention in a condition in which the intake manifold is practically mounted on an internal combustion engine;
   Fig. 2 is a perspective view of the intake manifold of the present invention;
   Fig. 3 is an exploded perspective view of the intake manifold of the resent invention; and
   Fig. 4 is a view of a portion of the intake manifold of the present invention where an upstream unit and a downstream unit are joined together.

### DETAILED DESCRIPTION OF THE INVENTION:

In the following, an intake manifold 10 of the present invention for an internal combustion engine 1 will be described in detail with reference to the accompanying drawings.

In the explanation, various directional terms such as right, left, upward, downward or the like are used for ease of description. However, such terms are to be understood with respect to only a drawing or drawings on which corresponding part or parts are shown.

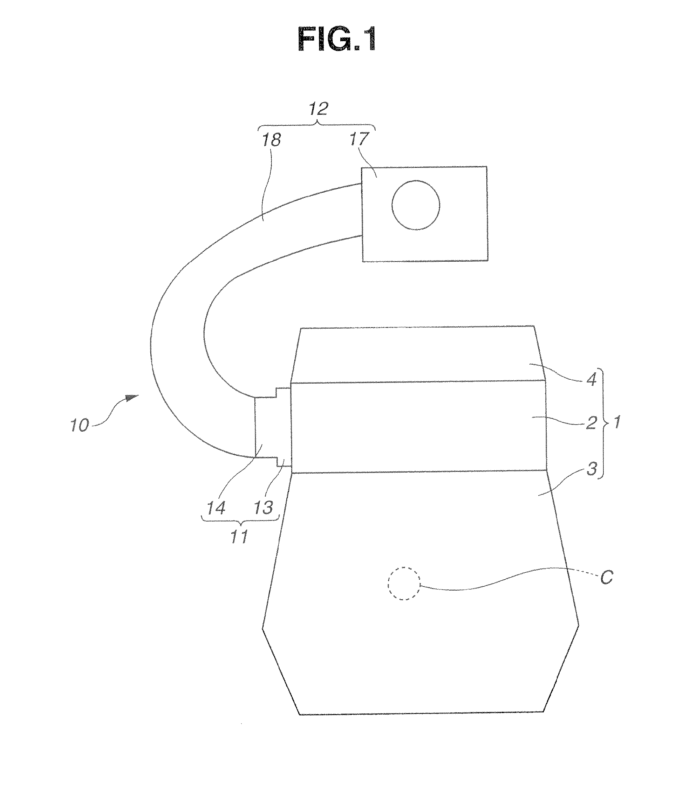

In Fig. 1, there is schematically shown the intake manifold 10 practically applied to an inline-four-cylinder type internal combustion engine 1. As will be understood from this drawing, the intake manifold 10 is mounted to one of opposed side walls of the engine 1 with respect to a direction in which a crankshaft C of the engine 1 extends.

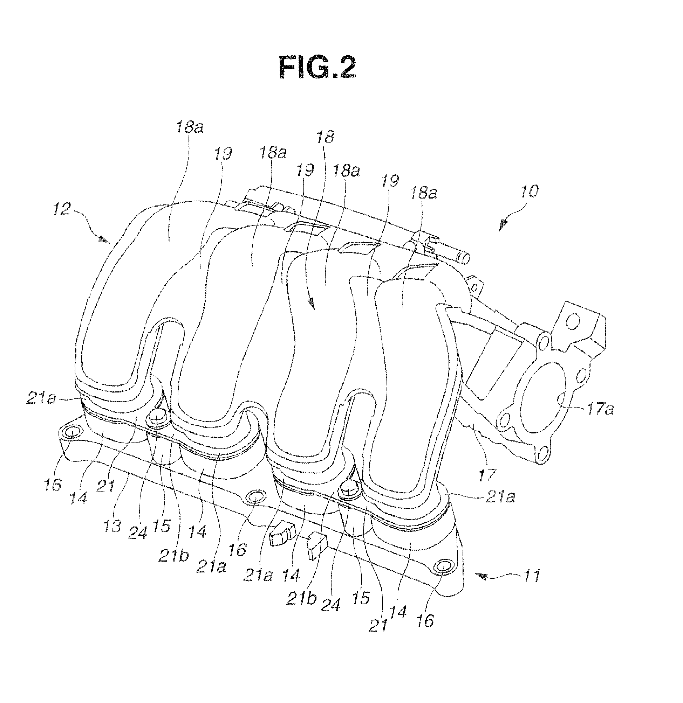

As is seen from Figs. 1 and 2, the intake manifold 10 comprises generally a downstream unit 11 that is mounted to a cylinder head 2 of the engine 1 through connecting bolts (not shown) and an upstream unit 12 that is separated from the engine 1.

As is seen from Fig. 1, the intake manifold 10 is generally U-shaped and connected to the engine 1 in such a manner that a leading end of the upstream unit 12 is positioned above the engine 1. As will be mentioned hereinafter, the leading end of the upstream unit 12 has an elongate collector portion 17 integrally connected thereto.

In Fig. 1, denoted by numeral 3 is a cylinder block of the engine 1 and denoted by numeral 4 is a rocker cover that covers an upper part of the cylinder head 2. In the illustrated embodiment, the leading end of the upstream unit 12 is positioned above the engine 1. However, if desired, the leading end of the upstream unit 12 may be placed at any position, for example around or beside the engine 1, so long as the leading end is separated from the engine 1.

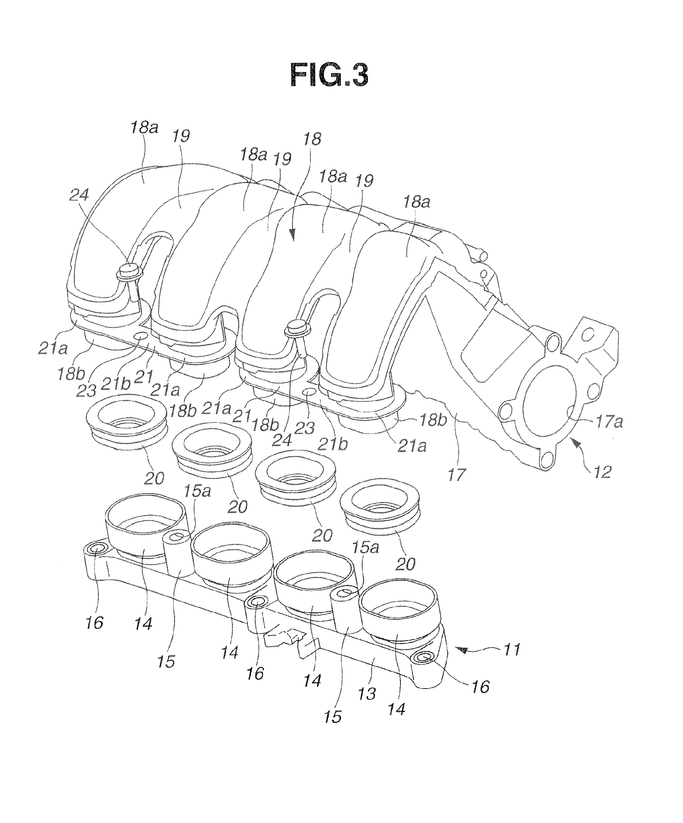

The downstream unit 11 is constructed of a high heat resistant resin (for example, glass fiber reinforced polyamide resin or the like) and as is seen from Figs. 2 and 3, includes an elongate base portion 13 that is to be connected to the cylinder head 2, four apertured collar portions 14 that are projected from the elongate base portion 13 and two stud portions 15 that are integral with and projected from the elongate base portion 13. The stud portions 15 have each a threaded hole 15a. As shown, one of the stud portions 15 is placed between a pair of the apertured collar portions 14 and the other of the stud portions 15 is placed between the other pair of the apertured collar portions 14. Although the number of the apertured collar portions 14 is four in the illustrated embodiment, the number of the apertured collar portions 14 corresponds to that of cylinders (or combustion chambers) that an associated internal combustion engine has.

It is to be noted that the downstream unit 11 including the elongate base portion 13, apertured collar portions 14 and stud portions 15 is an integrally molded unit.

As is seen from Figs. 2 and 3, the elongate base portion 13 is rectangular in shape. That is, when properly mounted to the engine 1, the elongate base portion 13 extends in a direction along which the cylinders (not shown) of the engine 1 are aligned.

As will be understood from Figs. 1 and 2, the elongate base portion 13 is connected to the cylinder head 2 of the engine 1 through connecting bolts (not shown). Upon this connection, the four apertured collar portions 14 become in communication with four intake ports (not shown) formed in the cylinder head 2, which are respectively connected to four cylinders formed in the cylinder block 3.

The stud portions 15 have each a cylindrical form and function to establish tight connection between the downstream and upstream units 11 and 12. That is, as will be understood from Figs. 2 and 3, in order to couple the upstream unit 12 and the downstream unit 11, connecting bolts 24 from the upstream unit 12 are threaded into the threaded holes 15a of the stud portions 15 to establish the tight connection between the two units 11 and 12.

Denoted by numeral 16 are three holes formed in the elongate base portion 13, through which connecting bolts (not shown) are engaged with respective threaded holes (not shown) formed in the cylinder head 2 of the engine 1 to establish a tight connection of the intake manifold 10 to the engine 1.

The upstream unit 12 is constructed of a molded resin and as is best seen from Fig. 3, the upstream unit 12 includes an elongate collector portion 17 that has an inlet opening 17a for introducing cleaned air from an air cleaner (not shown) and a manifold portion 18 that includes four curved tubes 18a each having an inlet opening exposed to an interior of the elongate collector portion 17. Although the number of the curved tubes 18a is four in the illustrated embodiment, the number of the tubes 18a corresponds to that of the cylinders (or combustion chambers) that the associated internal combustion engine 1 has.

It is now to be noted that the resin of the upstream unit 12 is a resin of which heat resistance is sufficiently lower than that of the above-mentioned high heat resistant resin of the downstream unit 11. One example of such low heat resistant resin for the upstream unit 12 is polypropylene.

For producing the upstream unit 12, the elongate collector portion 17 and the manifold portion 18 are molded separately and then these two portions 17 and 18 are integrally coupled or united through a vibration welding or the like.

As is best seen from Fig. 3, the tubes 18a of the manifold portion 18 are each generally U-shaped. As shown, the four tubes 18a are integrally connected to one another through three connecting walls 19.

Due to employment of the connecting walls 19, the manifold portion 18 has a robust construction. In other words, downstream ends (or leading ends) 18b of the tubes 18a have a fixed construction. This is very advantageous because positioning of the downstream ends 18b relative to the apertured collar portions 14 of the downstream unit 11 can be easily carried out. Thus, unlike the above-mentioned conventional intake manifold, the intake manifold of the invention can have a high productivity.

As will be understood from Figs. 2 and 3, downstream ends 18b of the tubes 18a are connected to the apertured collar portions 14 through annular sealing members 20. Due to usage of the sealing members 20, each tube 18a is hermetically connected to the corresponding apertured collar portion 14.

Two pairs of connecting flanges 21 are integrally formed on and around the downstream ends 18b of two pairs of the tubes 18a respectively. As shown, each pair of connecting flanges 21 comprises two annular parts 21a that are integrally formed on and around the downstream ends 18b of the paired tubes 18a and a bridge part 21b that is integral with and extends between the two annular parts 21a. Each annular part 21a has an outer diameter sufficiently larger than that of the downstream end 18b of the corresponding tube 18a, as shown. Each bridge part 21b is formed with an opening 23 through which the above-mentioned connecting bolt 24 passes for the tight connection between the upstream and downstream units 12 and 11.

It is to be noted that provision of the connecting flanges 21 promotes the robust construction of the downstream ends (or leading ends) 18b of the tubes 18a and thus, positioning of the downstream ends 18b of the tubes 18a of the upstream unit 12 relative to the apertured collar portions 14 of the downstream unit 11 can be much easily carried out. This means increase in productivity of the intake manifold of the invention.

The annular sealing members 20 are constructed of a heat resistant elastic material such as heat resistant flexible rubber, heat resistant soft plastic or the like.

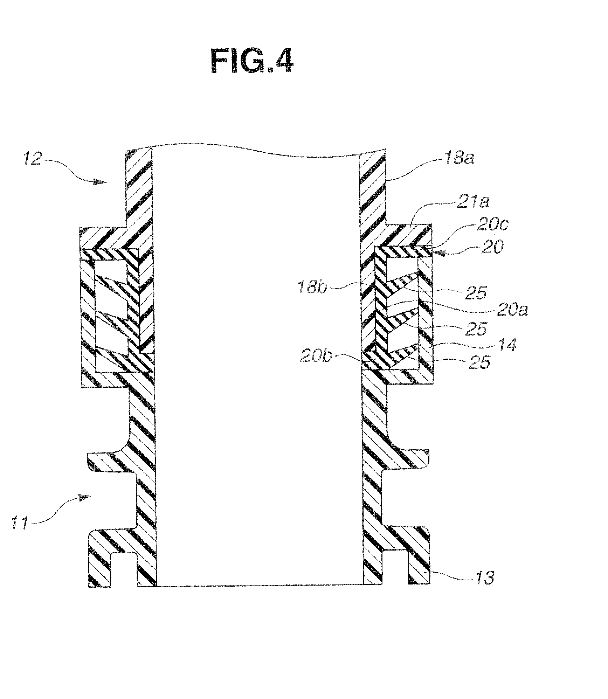

As will be understood from Figs. 3 and 4, each sealing member 20 is shaped generally cylindrical and has a cylindrical inner surface that is intimately received on the downstream end 18b of the corresponding tube 18a.

As is seen from Fig. 4, the annular sealing member 20 is formed, on a cylindrical outer surface thereof, with three circular sealing lips 25. Once the downstream end 18b of each tube 18a of the upstream unit 12 is correctly mated with the corresponding apertured collar portion 14 of the downstream unit 11, leading ends of the sealing lips 25 of the annular sealing member 20 are brought into intimate contact with a cylindrical inner surface of the apertured collar portion 14, as shown.

As is understood from Fig. 4, each annular sealing member 20 comprises a cylindrical part 20a from which the three sealing lips 25 extend radially outward, an apertured bottom part 20b integrally formed on a lower end of the inner cylindrical surface of the cylindrical part 20a and an upper flange part 20c integrally formed on an upper end of the cylindrical part 20a.

As will be understood from Fig. 4, upon proper connection between the downstream and upstream units 11 and 12 having each annular sealing member 20 put between the apertured collar portion 14 and the downstream end 18b, the annular sealing member 20 is so set that the upper flange part 20c is put between the annular part 21a of the flange 21 and an upper end of the apertured collar portion 14, the apertured bottom part 20b is put between a lower end of the downstream end 18b and a bottom wall of the aperture collar portion 14 and the three sealing lips 25 are in contact with the cylindrical inner surface of the apertured collar portion 14, as shown.

In the following, steps for mounting the intake manifold 10 to the internal combustion engine 1 will be described with the aid of Figs. 1, 3 and 4.

First, the downstream unit 11 is fixed to the cylinder head 2 by using the three connecting bolts (not shown). That is, for the fixing of the unit 11, the connecting bolts are inserted through the holes 16 of the elongate base portion 13 and then engaged with the respective threaded holes (not shown) of the cylinder head 2. Then, the four annular sealing members 20 are put into the apertured collar portions 14 respectively. If desired, the step of putting the annular sealing members 20 into the apertured collar portions 14 may be carried out prior to the step of fixing the downstream unit 11 to the cylinder head 2 of the engine 1.

Then, the upstream unit 12 is brought to the downstream unit 11 directing the downstream ends 18b of the tubes 18a toward the apertured collar portions 14 of the downstream unit 11 respectively. Then, the downstream ends 18b of the tubes 18a are intimately inserted into the annular sealing members 20 held in the apertured collar portions 14 respectively, as is seen from Fig. 4. As has been mentioned hereinabove, because of the fixed construction of the downstream ends 18b of the tubes 18a, the step of positioning the downstream ends 18b relative to the apertured collar portions 14 and the next step of inserting the downstream ends 18b into the sealing members 20 held in the apertured collar portions 14 are easily and smoothly carried out.

Then, as will be seen from Figs. 2 and 3, the two connecting bolts 24 are inserted through the openings 23 of the flanges 21 and engaged with the threaded holes 15a of the stud portions 15 of the elongate base portion 13.

With the above-mentioned assembling steps, the two units 11 and 12 can be tightly coupled to constitute the intake manifold 10 and tightly mounted to the cylinder head 2 of the internal combustion engine 1, as is seen from Fig. 1.

As will be understood from the above description, the steps for assembling the intake manifold 10 and mounting the intake manifold 10 to the cylinder head 2 can be easily and simply carried out because the assembling steps are those commonly used without requiring employment of skilled labor and time. This is preferable when considering the finally set complicated arrangement of the intake manifold 10 in which as is seen from Fig. 1, the elongate collector portion 17 is placed above the engine 1.

In the following, advantages of the present invention will be described with the aid of the drawings.

Since the downstream ends 18b of the tubes 18a of the upstream unit 12 have a robust construction due to the reasons mentioned hereinabove, fixing the downstream ends 18b to the apertured collar portions 14 of the downstream unit 11 can be easily and smoothly carried out, which increases the productivity of the intake manifold of the invention.

As is seen from Fig. 1, upon assembly, the elongate collector portion 17 is positioned above both the elongate base portion 13 and four apertured collar portions 14 of the downstream unit 11. In other words, in practical use, the upstream unit 12 is positioned remote from the engine 1 as compared with the downstream unit 11 that is directly connected to the engine 1.

In view of this arrangement, in the present invention, only the downstream unit 11 directly connected to the cylinder head 2 of the engine 1 is constructed of a high heat resistant resin, for example, a glass fiber reinforced polyamide resin or the like. While, the upstream unit 12 placed apart from the engine 1 is constructed of a resin of which heat resistance is sufficiently lower than that of the downstream unit 11. As is mentioned hereinabove, one example of such low heat resistant resin for the upstream unit 12 is polypropylene which is inexpensive as compared with the glass fiber reinforced polyamide resin for the downstream unit 11.

In the invention, the upstream unit 12 that does not need a high heat resistance is constructed of a relatively inexpensive resin and only the downstream unit 11 that needs the high heat resistance is constructed of an expensive resin. Accordingly, the intake manifold 10 of the invention can satisfy a temperature condition required by the intake manifold 10 while reducing a production cost of the intake manifold 10.

Furthermore, due to flexibility of the heat resistant annular sealing members 20 arranged between the downstream unit 11 and the upstream unit 12, a slight misalignment between these two units 11 and 12, which would occur when the two units 11 and 12 are being coupled, is suitably absorbed, and thus, the needed hermetical sealing between the two units 11 and 12 is assured.

In the above-mentioned embodiment, the connecting bolts 24 are used for connecting the upstream unit 12 to the downstream unit 11. However, if desired, other techniques may be used for such connection. Snap-fit members are one example of such techniques.

In the above-mentioned embodiment, the heat resistant annular sealing members 20 are employed for establishing a hermetic connection between the upstream and downstream units 12 and 11. However, if desired, the downstream ends 18b of the tubes 18a may be hermetically bonded to the apertured collar portions 14 without usage of the annular sealing members 20. In this case, the connecting bolts 24 may be omitted and the shape of the downstream unit 11 may be much simplified.

The entire contents of Japanese Patent Application 2011-234775 filed October 26, 2011 are incorporated herein by reference.

Although the invention has been described above with reference to an embodiment of the invention, the invention is not limited to such embodiment as described above. Various modifications and variations of such embodiment may be carried out by those skilled in the art, in light of the above description.

## Claims

1. An intake manifold for an internal combustion engine, comprising:
an upstream unit (12) of molded resin, the upstream unit (12) including an elongate collector portion (17) that has an inlet opening (17a) for introducing cleaned air, and a manifold portion (18) that includes a plurality of curved tubes (18a) that are fixed to one another, each curbed tube (18a) having an inlet opening exposed to an interior of the elongate collector portion (17);
a downstream unit (11) of molded resin, the downstream unit (11) including a base portion (13) that is to be connected to a cylinder head (2) of the engine and a plurality of apertured collar portions (14) that are projected from the base portion (13); and
a plurality of sealing members (20) through which leading ends (18b) of the curved tubes (18a) are hermetically inserted into the apertured collar portions (14) thereby to constitute an entire construction of the intake manifold,
wherein the molded resin of the downstream unit (11) has a heat resistance that is higher than that of the upstream unit (12).

2. An intake manifold as claimed in Claim 1, in which the molded resin of the downstream unit (11) is different from the molded resin of the upstream unit (12).

3. An intake manifold as claimed in Claim 2, in which the curved tubes (18a) are integrally connected through connecting walls (19).

4. An intake manifold as claimed in Claim 1, further comprising:
connecting flanges (21) integrally formed on the downstream ends (18b) of the curved tubes (18a), each connecting flange (21) having an opening (23);
stud portions (15) integrally formed on the base portion (13) of the downstream unit (11), each stud portion (15) being formed with a threaded hole (15a); and
a plurality of connecting bolts (24) that pass through the openings (23) of the connecting flanges (21) and are engaged with the threaded holes (15a) of the stud portions (15) thereby to tightly couple the upstream and downstream units (12, 11).

5. An intake manifold as claimed in Claim 4, in which each connecting flange (21) comprises:
two annular parts (21a) that are integrally formed on and around the downstream ends (18b) of a pair of the curbed tubes (18a); and
a bridge part (21b) that is integral with and extends between the two annular parts (21a).

6. An intake manifold as claimed in Claim 1, in which the molded resin of the upstream unit (12) is polypropylene and the molded resin of the downstream unit (11) is glass fiber reinforced polyamide resin.

7. An intake manifold as claimed in Claim 1, in which each of the sealing members (20) is constructed of a heat resistant flexible rubber or a heat resistant soft plastic.

8. An intake manifold as claimed in Claim 1, in which each of the sealing members (20) is shaped cylindrical and comprises:
a cylindrical part (20a) that is tightly put on the downstream end (18b) of the corresponding curved tube (18a);
a plurality of sealing lips (25) integral with and extending radially outward from the cylindrical part (20a), the sealing lips (25) being pressed against an inner cylindrical surface of the corresponding apertured collar portion (14);
an apertured bottom part (20b) integrally forced on a lower end of the inner cylindrical surface of the cylindrical part (20a) and pressed between the leading end of the downstream end (18b) and a bottom of the apertured collar portion (14); and
an upper flange part (20c) integrally formed on an upper end of the inner cylindrical surface of the cylindrical part (20a) and pressed between a flange (21) of the corresponding curved tube (18a) and a leading end of the corresponding collar portion (14).

9. An intake manifold as claimed in Claim 1, in which:
the upstream unit (12) has an elongate collector portion (17) integrally connected thereto,
the elongate collector portion (17) has an inlet opening (17a) for introducing cleaned air from an air cleaner when the intake manifold is properly connected to an associated internal combustion engine, and
the elongate collector portion (17) is positioned above the internal combustion engine when the intake manifold is properly connected to the internal combustion engine.

10. A split type intake manifold for an internal combustion engine, comprising:
an upstream unit (12) of molded resin, the upstream unit (12) including an elongate collector portion (17) that has an inlet opening (17a) for introducing cleaned air, and a manifold portion (18) that includes a plurality of curved tubes (18a) that are fixed to one another through connecting walls (19);
a downstream unit (11) of molded resin, the downstream unit (11) including a base portion (13) that is to be connected to a cylinder head (2) of the engine and a plurality of apertured collar portions (14) that are projected from the base portion (13);
a plurality of cylindrical sealing members (20) through which leading ends (18b) of the curved tubes (18a) are hermetically inserted into the apertured collar portions (14) respectively thereby to constitute an entire construction of the intake manifold,
wherein the molded resin of the downstream unit (11) has a heat resistance that is higher than that of the upstream unit (12).
